# EUROPEAN PATENT APPLICATION

(11) **EP 4 383 172 A1**
(43) Date of publication of application: **12.06.2024**
(21) Application number: 23195030.4
(22) Date of filing: 04.09.2023
(51) Int. Cl.: G06Q 20/20, G06Q 20/32, G06Q 20/40, G06Q 30/0207, G07G 1/00, G07G 1/01

(54) **CHECKOUT APPARATUS AND METHOD**

(30) Priority: 09.12.2022 JP 2022197291
(71) Applicant: Toshiba Tec Kabushiki Kaisha, Shinagawa-ku Tokyo 141-8562 (JP)
(72) Inventor: Shikano, Kazuo, Tokyo 141-8562 (JP)
(74) Representative: Bandpay & Greuter

(57) **Abstract**

According to one embodiment, a checkout apparatus includes a communication interface that can be connected to a store server. A control unit in the checkout apparatus is configured to acquire commodity information for a commodity being registered for purchase in a transaction with a customer, receive customer identification information identifying the customer, acquire pre-registered coupon information indicating a coupon registered by the customer based on the received customer identification information, and execute privilege processing based on the pre-registered coupon information and the acquired commodity information. The control unit then executes checkout processing for the transaction based on the commodity information and the privilege processing.

## Description

### FIELD

Embodiments described herein relate generally to a checkout apparatus and a method for a checkout apparatus.

### BACKGROUND

For the purpose of sales promotions, stores and companies selling commodities and services issue coupons (see for example, JP-A-2019-071031 (Patent Literature 1)). For example, a store issues a digital coupon via a network to a customer who registered an electronic mail address with the store, such as when becoming a store loyalty program member.

For using the digital coupon, the customer causes a portable terminal, such as a smartphone, to display a barcode or the like for specifying the issued coupon. A POS (Point Of Sales) terminal, which is used for checkout processing, reads the barcode displayed on the portable terminal, then applies the associated discount (price cut) to the price of a commodity targeted by the coupon, and executes the checkout processing for the commodity accordingly.

Typically, a target commodity for a coupon is pre-established. Therefore, with existing systems, if the customer uses multiple coupons in one transaction, barcodes for each of the coupons need to be read separately. As a result, a longer time is required for checkout by the customer using more coupons.

For applying the coupon, a target commodity of the coupon needs to be included in commodities being purchased by the customer. If the customer does not purchase a target commodity of the coupon, the customer cannot use the coupon. A store clerk may have to make the decision regarding the applicability of any particular coupon in such circumstances and return the unused/unusable coupon to the customer according to necessity. However, if the store clerk is unfamiliar with such circumstances, the coupon is more likely to be inappropriately used.

To this end, a checkout apparatus, a checkout system and a checkout system according to appended claims are provided.

### BRIEF DESCRIPTION OF THE DRAWINGS

FIG. 1 is a diagram illustrating an overview of a coupon system in an embodiment.
FIG. 2 is a diagram illustrating a data configuration of a point management file stored in a storage unit of a point server.
FIG. 3 is a diagram illustrating a data configuration of a coupon management file stored in a storage unit of a coupon server.
FIG. 4 is a diagram illustrating a data configuration of a registered coupon file stored in a storage unit of a coupon server.
FIG. 5 is a block diagram of a POS terminal.
FIG. 6 is a diagram illustrating a data configuration of commodity information stored in a POS termina.
FIG. 7 is a diagram illustrating a data configuration of registered coupon information stored in a POS terminal.
FIG. 8 is a diagram illustrating a data configuration of a commodity master stored in a POS terminal.
FIG. 9 is a block diagram illustrating functional aspects of a control unit of a POS terminal.
FIG. 10 is a sequence chart illustrating a flow of an operation of a coupon system.
FIGs. 11 to 18 are diagrams illustrating examples of a screen displayed by a POS terminal.

### DETAILED DESCRIPTION

An object of embodiments is to provide a checkout apparatus and a method capable of efficiently performing checkout for a sales transaction involving one or more coupons.

According to one embodiment, a checkout apparatus has a communication interface connectable to a store server and a control unit. The control unit is configured to acquire commodity information for a commodity being registered for purchase in a transaction with a customer, receive customer identification information identifying the customer, acquire pre-registered coupon information indicating a coupon registered by the customer based on the received customer identification information, and execute privilege processing based on the pre-registered coupon information and the acquired commodity information. The control unit then executes checkout processing (settlement processing) for the transaction based on the commodity information and the executed privilege processing.

A checkout apparatus and a method in certain example embodiments are explained below with reference to the drawings. Embodiments of the present disclosure are not limited to these particular examples. A POS terminal that performs commodity registration and checkout processing according to operation of a store clerk can be a checkout apparatus. However, a checkout apparatus is not limited to this. In other examples, a checkout apparatus may be a self-service POS terminal that performs commodity registration and checkout processing according to operations by a customer.

In an example, a checkout apparatus may receive commodity information from a separate registration apparatus, which performs the commodity registration, and the checkout apparatus may just perform checkout processing based on the registered commodity information from the other apparatus. For example, a checkout apparatus of an embodiment may be used in a POS system of a so-called two-person system. In other examples, a checkout apparatus of an embodiment may be a checkout apparatus in a semi-self-service POS system including a registration apparatus for commodity registration according to operation of a store clerk and a checkout apparatus (payment kiosk) that performs checkout processing according to operation of a customer.

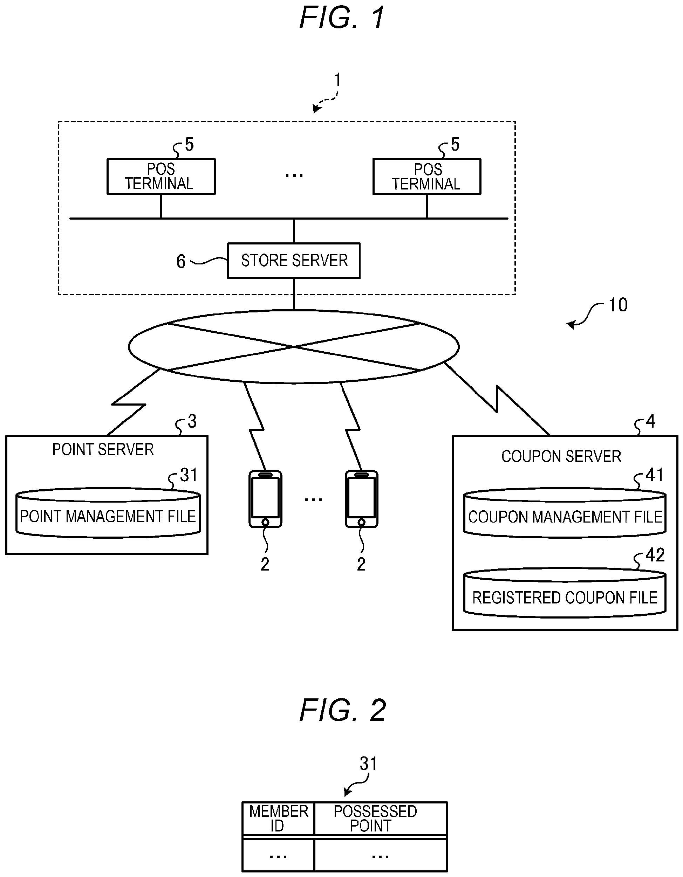

FIG. 1 is a diagram illustrating an overview of a coupon system 10 in an embodiment. The coupon system 10 includes a store system 1, a user terminal 2, a point server 3, and a coupon server 4. The store system 1, the user terminal 2, the point server 3, and the coupon server 4 are communicably connected to one another via a network such as the Internet. The store system 1, the point server 3, and the coupon server 4 may be managed by the same company or may be respectively managed by different companies. Additionally, the numbers of store systems 1, user terminals 2, point servers 3, and coupon servers 4 are not limited to illustrated examples.

The user terminal 2 is a terminal device such as a smartphone carried by a store member (a customer) who is a user of the coupon system 10. An application program for store members (also referred to as "member application") is installed in the user terminal 2. The user terminal 2 starts the member application to thereby display a member ID as text or a code symbol (a barcode code, a two-dimensional code, or the like) on a display unit.

According to an operation of the member application, the user terminal 2 receives and stores a coupon distributed by the coupon server 4 and displays coupon information of the stored coupon on the display unit in a selectable manner. Before a transaction starts, the customer can select coupon information to be used in the transaction from the displayed coupon information. The customer can present a selected coupon (an application coupon) to an operator of a POS terminal 5 in a manner similar to a paper coupon. The selected coupon can then be registered/used in the transaction. It is assumed in this example that a coupon previously used in another transaction or already registered in the present transaction cannot be used again after being read by the POS terminal 5.

The coupon information is information used for processing for the store to grant a privilege to the customer, for example, a price-cut. Specifically, the coupon information can be a coupon ID for specifying the coupon and information indicating content of the coupon.

Privileges that the customer can obtain with the coupon include price-cut for deducting a fixed amount from a sales price and discount for deducting an amount of a fixed rate from the sales price (collectively referred to as a "price-cut") and free-of-charge reception of small gifts, goods, and the like. In this embodiment, as an example, the privilege is a price-cut.

The point server 3 manages points (e.g., loyalty points) for store members (customer who have registered to participate in a loyalty points program). In this embodiment, each point has a value equivalent to money and can be used in the next and subsequent shopping transactions. In this example, points are granted to a customer according to a purchase amount of a transaction. Accumulated points can be used to pay a transaction amount or can be exchange for a commodity or prize. Typically, points may be exchanged for a commodity or a gift only after the accumulated points reaches a predetermined number (threshold).

FIG. 2 is a diagram illustrating a data configuration of a point management file 31 stored in a storage unit of the point server 3. The point management file 31 stores a member ID and a possessed point value in association with each other. The member ID is for identifying a customer and is an example of customer identification information. The possessed point value is information indicating accumulated points (the number of points) held by the customer.

The point server 3 receives the points related to a transaction from the POS terminal 5 via a store server 6 and manages (tracks) the points for each of store members. Specifically, the point server 3 receives, from the POS terminal 5, a member ID indicating the customer in a settled transaction and a point value granted to the customer in the transaction and updates the point management file 31 accordingly. More specifically, in the point management file 31, the point server 3 adds the point received from the POS terminal 5 to a possessed point value corresponding to the member ID received from the POS terminal 5.

The point server 3 also receives, from the POS terminal 5, a member ID indicating a customer in a settled transaction and the points used by the customer in the transaction and updates the point management file 31 accordingly. More specifically, in the point management file 31, the points server 3 subtracts the point received from the POS terminal 5 from a possessed point value corresponding to the member ID received from the POS terminal 5.

The point management file 31 may be updated every time a settlement is performed by a POS terminal 5 or may be updated periodically, for example, once a day. For example, according to a batch processing method of a store server 6 that manages transaction data of POS terminals 5, the point server 3 receives, from the store server 6, information concerning points of settled transactions once a day. The point server 3 can update the point management file 31 based on the information received from the store server 6.

The point server 3 may be a server that manages points of customers of a single store or may be a server that manages points of customers of a plurality of stores. If the point server 3 manages the points of the customers of a single store, described functions of the point server 3 may be imparted to the store server 6. If the point server 3 manages the points of the customers of a plurality of stores, the point management file 31 desirably stores store IDs for specifying the individual stores in association with member IDs. The stores may be operated by the same company or may be operated by different companies.

The coupon server 4 has a function of distributing a coupon to the user terminal 2. Specifically, the coupon server 4 receives a coupon plan from the store and distributes coupons corresponding to the coupon plan to user terminals 2. For example, the coupon server 4 receives coupon information and a distribution condition as part of the coupon plan and distributes the coupon information to the user terminal 2 of a customer matching the distribution condition. In the following explanation, the coupon server 4 distributing coupon information to a user terminal 2 is sometimes referred to as "issuing a coupon".

The coupon server 4 manages coupon information of the coupon(s) issued to the customer. The coupon server 4 manages, in response to a prior registration request from the user terminal 2, coupon information of a coupon to be used by the customer in the next transaction. The coupon server 4 stores a coupon management file 41 and a registered coupon file 42.

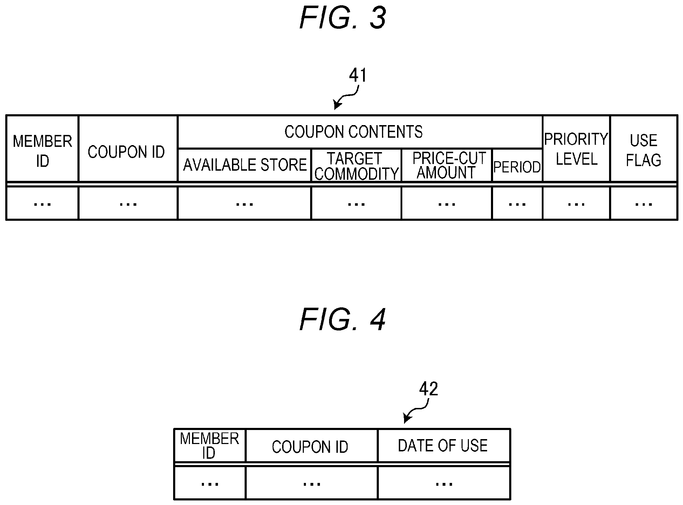

The coupon management file 41 is a file for tracking coupon information of coupons possessed by each of the customers. FIG. 3 is a diagram illustrating a data configuration of the coupon management file 41 stored in a storage unit of the coupon server 4. The coupon management file 41 stores a coupon ID, coupon contents, a priority level, and a use flag in association with a member ID.

As explained above, the member ID is customer identification information for identifying a customer. The coupon ID is information for specifying a coupon. The coupon contents in this example include an available store, a target commodity, a price-cut amount, a period (valid use period), and the like. The available store value is information indicating the store(s) where the coupon can be used and is, for example, a store code for specifying the permissible store(s). The target commodity is information for specifying the commodity associated with the coupon and is, for example, a commodity code of a target commodity. The price-cut amount is information indicating an amount cut by the use of the coupon. The period is information indicating a time period in which the coupon is usable (e.g., an expiration date).

The priority level is, for example, a numerical value and is used to determine a priority rank when a plurality of coupons are available. The priority rank determination is, for example, to preferentially use coupons according to value (price-cut amount). Details of the determinations associated with the priority level are explained below.

The use flag is information indicating whether the coupon has been used. In the use flag, "unused" is registered once the coupon is issued. The use flag is rewritten to "used" if the coupon server 4 receives, from the POS terminal 5, information to the effect that the coupon has been used in a transaction. The coupon, the use flag of which has been rewritten to "used", is managed as unable to be used again in this example.

The coupon management file 41 stores not only the coupon information of the coupons distributed to the user terminals 2 by the coupon server 4 but also information concerning paper coupons issued to the customer. For example, the coupon server 4 acquires, from the POS terminal 5 that performed checkout processing, coupon information of a paper coupon printed on a receipt during checkout at the store and a member ID of a customer who paid a purchase price in checkout, that is, a customer who performed a transaction and registers the coupon information and the member ID in the coupon management file 41.

The registered coupon file 42 is a file for tracking coupon information about coupon to be used by the customer in the next transaction. Such coupon information is set, in response to a coupon-to-be-used prior registration request from a user terminal 2. The registered coupon file 42 stores information included in the coupon-to-be-used prior registration request. FIG. 4 is a diagram illustrating a data configuration of the registered coupon file 42 stored in the storage unit of the coupon server 4. The registered coupon file 42 stores a coupon ID and a date of use in association with a member ID.

As explained above, the member ID is customer identification information for identifying a customer. The coupon ID is information for specifying a coupon. The date of use is information indicating a scheduled date of use of the coupon.

The coupon-to-be-used prior registration request transmitted by the user terminal 2 requires the customer to select a coupon to be used in a transaction and register the coupon in the registered coupon file 42 beforehand (that is, before performing checkout for the transaction). For example, when selecting a commodity to be purchased on a selling floor or if waiting for checkout at a checkout counter, the customer starts a member application and selects a coupon to be used during checkout. The customer can select a plurality of coupons to be used. The user terminal 2 transmits, to the coupon server 4, information indicating a coupon-to-be-used prior registration request including coupon IDs, member IDs of customers, and dates of use of coupons about all the selected coupons. The coupon-to-be-used prior registration request can also be transmitted before the coupon use date. As explained above, the coupon server 4 tracks the information included in the coupon-to-be-used prior registration request.

Upon receiving a registered coupon inquiry including a member ID from a POS terminal 5, the coupon server 4 reads a coupon ID and a date of use corresponding to the member ID from the registered coupon file 42. The coupon server 4 refers to the coupon management file 41 and checks that the coupon ID was not already used. If the coupon ID has not already been used, the coupon server 4 reads coupon contents and a priority level from the coupon management file 41. The coupon server 4 transmits the coupon ID, the date of use, the coupon contents, and the priority level to the POS terminal 5 as registered coupon information. A coupon ID registered in the registered coupon file 42 and coupon contents associated with the coupon ID in the coupon management file 41 are examples of registered coupon information indicating a coupon registered beforehand.

Upon receiving a presented coupon inquiry including a coupon ID from the POS terminal 5, the coupon server 4 refers to the coupon management file 41 and checks that the coupon ID was not already used. If the coupon ID was not already used, the coupon server 4 reads coupon contents and a priority level from the coupon management file 41. The coupon server 4 transmits the coupon ID, the coupon contents, and the priority level to the POS terminal 5 as presented coupon information. A coupon ID and coupon contents associated with the coupon ID in the coupon management file 41 are examples of presented coupon information indicating a coupon presented to the operator of the POS terminal 5 by the customer.

In some examples, the coupon server 4 may have just the function of managing coupon information without the function of distributing a coupon. The coupon server 4 may be a server that manages coupon information of customers of one store or may be a server that manages coupon information of customers of a plurality of stores. If coupon information of the customers of just one store is managed, the described functions of the coupon server 4 may be provided by the store server 6. The plurality of stores may be operated by the same company or may be operated by different companies.

The store system 1 of this example is applied to a large retailer such as a supermarket. The store system 1 includes one or more POS terminals 5 and the store server 6. The POS terminals 5 and the store server 6 are communicably connected to each other via a network such as a LAN (Local Area Network).

The POS terminal 5 is a terminal with which a store clerk performs operations relating to commodity registration and checkout processing. According to operation of the operator (the store clerk), the POS terminal 5 reads a commodity code of a commodity to be purchased by the customer and stores commodity information acquired based on the read commodity code to thereby execute commodity registration. The POS terminal 5 executes checkout processing based on information registered by the commodity registration. The POS terminal 5 is an example of a checkout apparatus.

The checkout processing is processing associated with the customer paying the price of a purchased commodity and includes calculation processing, settlement processing, and receipt dispensing processing. The calculation processing is for example, processing for calculating a transaction amount. The settlement processing is processing for permitting the customer to complete payment of the transaction amount calculated by the calculation processing and includes calculation and dispensing of change for cash payment and includes communication with a settlement server for cashless settlement. The settlement processing includes processing for granting points to the customer according to the settled amount. The receipt dispensing processing is processing for dispensing a paper receipt or an electronic receipt.

The POS terminal 5 executes privilege processing. The privilege processing is processing concerning use of a coupon. As the privilege processing, the POS terminal 5 determines whether there is a coupon to be used by the customer in a transaction and, if there is a coupon to be used, deducts a price-cut amount set by the coupon from a price of a target commodity. In the following explanation, processing for deducting the price-cut amount set by the coupon from the price of the target commodity is also referred to as "price-cut processing". The price-cut amount may be an amount equivalent to a discount rate set by the coupon. Processing for deducting the coupon discount amount is referred to as "discount processing".

During the commodity registration, the POS terminal 5 reads a member ID of the customer from a barcode displayed on the user terminal 2. During the checkout processing, the POS terminal 5 inquires the coupon server 4 whether there is a coupon registered beforehand by the customer and acquires any registered coupon information as a response to the inquiry. The POS terminal 5 checks whether any commodities registered in the transaction are also a coupon target commodity in the acquired registered coupon information. The POS terminal 5 performs the price-cut processing for any coupon target commodity among the registered commodities.

Consequently, even if the customer uses a plurality of coupons in one transaction, the POS terminal 5 can perform the price-cut processing relating to the plurality of coupons simply by reading the member ID. Therefore, since the POS terminal 5 does not need to separately read coupon IDs a plurality of times, it is possible to not only reduce a time required for checkout of one transaction but also improve efficiency of the operator (store clerk).

During the commodity registration, the POS terminal 5 may read a coupon presented to the operator by the customer to obtain a coupon ID, transmit a presented coupon inquiry including the coupon ID to the coupon server 4, and acquire presented coupon information. The coupon read by the POS terminal 5 in this context can be a paper coupon or a digital coupon (an application coupon) displayed by an application program started on the user terminal 2.

The POS terminal 5 can perform the checkout processing concurrently using a coupon read during the commodity registration and a coupon registered beforehand and acquired during the checkout processing. In concurrently using the coupons, if there are overlapping coupons, the POS terminal 5 compares the coupons based on a predetermined standard to thereby determine which coupon that should be used first (a specific example of the determination is explained below).

The store server 6 receives transaction data settled by the checkout processing from the POS terminals 5 and manages the transaction data. The store server 6 intensively manages the transaction data received from the POS terminals 5 and performs sales management (tracking) and the like in the store. The store server 6 updates, as appropriate, a commodity master storing commodity information of commodities handled by the store and transmits the commodity master to the POS terminals 5. The store server 6 transmits various kinds of information received from the POS terminal 5 to the point server 3 and the coupon server 4 according to necessity. The store server 6 transmits various kinds of information received from the point server 3 and the coupon server 4 to the POS terminal 5 according to necessity.

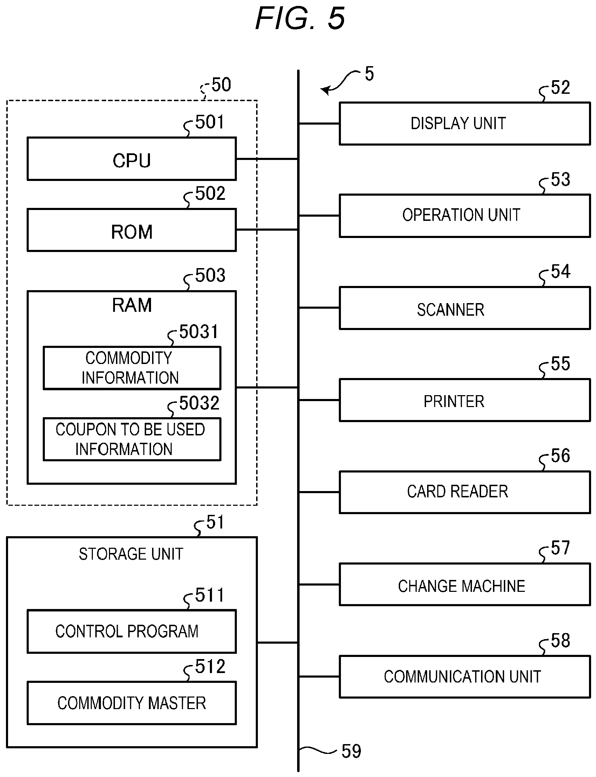

FIG. 5 is a block diagram illustrating hardware components of a POS terminal 5. The POS terminal 5 includes a control unit 50, a storage unit 51, a display unit 52, an operation unit 53, a scanner 54, a printer 55, a card reader 56, a change machine 57, and a communication unit 58. The control unit 50, the storage unit 51, the display unit 52, the operation unit 53, the scanner 54, the printer 55, the card reader 56, the change machine 57, and the communication unit 58 are connected to one another via a bus 59 or the like.

The control unit 50 includes a CPU (Central Processing Unit) 501, a ROM (Read Only Memory) 502, and a RAM (Random Access Memory) 503. The CPU 501, the ROM 502, and the RAM 503 are connected to one another via the bus 59.

The CPU 501 controls overall operations of the POS terminal 5. The ROM 502 stores various programs such as a program used to configure the CPU 501 and various data. The RAM 503 is used as a work area of the CPU 501. Various programs and various data stored in the ROM 502 and the storage unit 51 are loaded in the RAM 503. The CPU 501 operates according to a control program stored in the ROM 502 and the storage unit 51 and loaded in the RAM 503, whereby the control unit 50 executes various kinds of control processing for the POS terminal 5.

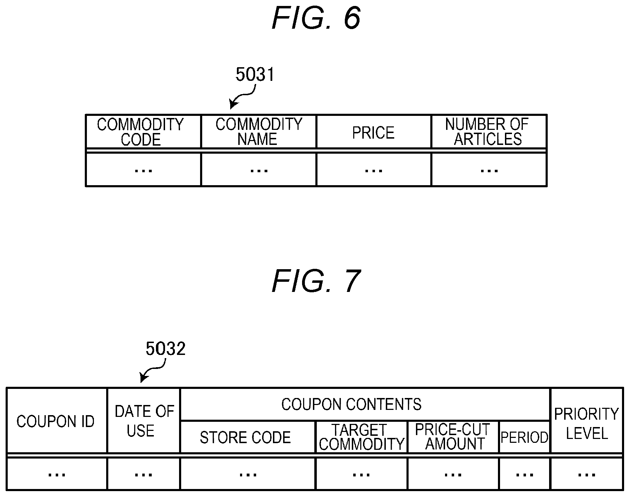

The RAM 503 stores commodity information 5031 and coupon-to-be-used information 5032 in predetermined regions respectively decided for the commodity information 5031 and the coupon-to-be-used information 5032. The commodity information 5031 is commodity information of a commodity to be purchased by a customer. FIG. 6 is a diagram illustrating a data configuration of the commodity information 5031. The commodity information 5031 is information associated with a commodity code and includes a commodity name, a price, and the number of articles.

The commodity code is information for identifying a commodity and is an example of commodity identification information. The commodity name is information indicating a name of the commodity. The price is information indicating a price of the commodity. The price of the commodity may be a tax inclusive price or a tax exclusive price. The number of articles is information indicating the number of separate instances of the commodity registered in the transaction.

The commodity name and the price are read from the storage unit 51 based on, for example, a commodity code read by the scanner 54 from a commodity barcode attached to the commodity. The number of articles is input from, for example, the operation unit 53. The commodity information 5031 being stored (registered) is referred to as "commodity registration" as well.

The coupon-to-be-used information 5032 is the presented coupon information and the registered coupon information received from the coupon server 4.

The presented coupon information is information concerning a coupon (a paper coupon or an application coupon) presented to the operator of the POS terminal 5 by the customer. The scanner 54 reads the coupon and outputs a coupon ID and the POS terminal 5 transmits an inquiry for coupon information corresponding to the coupon ID (a presented coupon inquiry) to the coupon server 4. The presented coupon information is then received as a response to the presented coupon inquiry. The POS terminal 5 stores the presented coupon information as the coupon-to-be-used information 5032.

The POS terminal 5 transmits, to the coupon server 4, an inquiry about registered coupon information corresponding to a member ID of the customer (a registered coupon inquiry). The registered coupon information is then received as a response to the registered coupon inquiry. The POS terminal 5 stores the registered coupon information as the coupon-to-be-used information 5032.

The coupon-to-be-used information 5032 is information concerning one or a plurality of coupons scheduled to be used by the customer in a transaction. FIG. 7 is a diagram illustrating a data configuration of the coupon-to-be-used information 5032. The coupon-to-be-used information 5032 is information associated with a coupon ID and includes a date of use, coupon contents, and a priority level.

As explained above, the coupon ID is information for specifying a coupon. The date of use is information indicating a scheduled date of use of the coupon. The coupon contents are the same as the coupon contents in the coupon management file 41. Therefore, redundant explanation of the coupon contents is omitted.

The priority level is, for example, a numerical value and is used to determine a priority rank in the use of a plurality of coupons. The determination is performed, for example, if a plurality of coupons having overlapping application ranges (for example, target commodities and classifications) are stored in the RAM 503 as part of the coupon-to-be-used information 5032. Priority levels of the coupons can be compared and a coupon having the higher priority is applied and lower priority overlapping coupons are not used.

The priority level is generally set such that a priority rank of a coupon having a high price-cut amount or having a high discount rate or a coupon near an expiration date of use rises. If there is no difference among priority levels (or priority ranks), a coupon registered in the RAM 503 first as the coupon-to-be-used information 5032 can be preferentially used.

The storage unit 51 can be a storage medium such as a HDD (Hard Disk Drive) or a flash memory and maintains stored content even if power is turned off. The storage unit 51 stores a control program 511 and a commodity master 512.

The control program 511 is, for example, a program for performing commodity registration based on a commodity code read by the scanner 54, a program for acquiring registered coupon information from the coupon server 4 based on the read member ID, or a program for performing the checkout processing for one transaction based on the commodity information 5031 and the coupon-to-be-used information 5032.

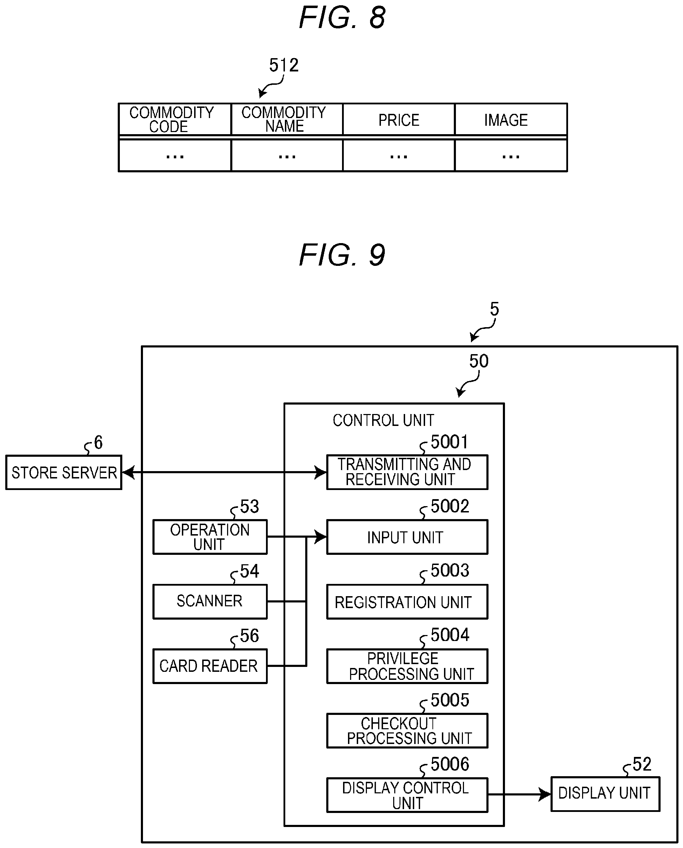

The commodity master 512 is a master file storing commodity information of commodities sold in the store and is transmitted from the store server 6 and stored in the storage unit 51. Since commodities dealt in by the store (or the details thereof) may change every day, the commodity master 512 can be updated as appropriate. FIG. 8 is a diagram illustrating a data configuration of the commodity master 512. The commodity master 512 stores a commodity name, a price, and an image in association with a commodity code.

As explained above, the commodity code is information for identifying a commodity, the commodity name is information indicating a name of the commodity, and the price is information indicating a price of the commodity. The image is image data such as a photograph or an illustration showing the exterior appearance of a representative commodity.

Referring back to FIG. 5, the hardware components of the POS terminal 5 are explained.

The display unit 52 is a display device such as a liquid crystal display or the like. The display unit 52 displays various kinds of information under control of the control unit 50. For example, the display unit 52 displays commodity information of a registered commodity, a transaction amount (a total amount of one transaction), and the like. The display unit 52 displays various operation screens for the operator to perform operation.

The operation unit 53 is an input device such as a touch panel provided on the surface of the display unit 52, a keyboard provided separately from the display unit 52, or the like. The operation unit 53 inputs, to the control unit 50, various kinds of information input by the operator. For example, the operation unit 53 includes a transaction start key and a subtotal key. The transaction start key receives operation (transaction start input) for instructing the control unit 50 to start a transaction (the commodity registration and the checkout processing). The subtotal key receives operation (checkout instruction input) for instructing the control unit 50 to end the commodity registration and transition to the checkout processing.

The scanner 54 reads information from various code symbols (a barcode, a two-dimensional code, and the like) shown on media. For example, the scanner 54 reads a commodity code from a commodity barcode attached to a commodity. The scanner 54 reads a commodity code from a commodity barcode attached to a commodity to be purchased by the customer. The scanner 54 also reads a member ID from a barcode displayed on the user terminal 2 of the customer. The scanner 54 may be a fixed scanner provided in the POS terminal 5 or may be a hand-held ("handy") scanner that the operator can pick up.

The printer 55 prints and dispenses a receipt relating to a transaction under the control of the control unit 50. The printer 55 prints, on the receipt, a transaction amount, a price-cut amount, commodity information of a purchased commodity, transaction information including granted points, various messages, and the like. At the time of the receipt dispensing, the printer 55 may print and dispense a paper coupon. The paper coupon may be dispensed as a part of the receipt or may be dispensed separately from the receipt.

The card reader 56 reads information from various types of cards. For example, the card reader 56 reads customer information necessary for credit card settlement from a credit card of the customer. The card reader 56 may read a member ID of a member card owned by the customer. The card reader 56 may be a magnetic card reader that reads information from a magnetic card or may be an IC card reader that reads information from a card incorporating an IC chip.

When the customer paid a purchase price by cash, the change machine 57 receives bills and coins paid by the customer and dispenses change according to necessity.

The communication unit 58 is an interface for communicating with an external apparatus, such as the store server 6. The control unit 50 is connected to the external apparatus via the communication unit 58 to be capable of transmitting and receiving information (data) to and from the external apparatus. For example, the control unit 50 is capable of transmitting and receiving information to and from the point server 3 and the coupon server 4 via the communication unit 58 and the store server 6.

FIG. 9 is a block diagram illustrating the functional aspects of the control unit 50 of the POS terminal 5. The CPU 501 operates according to a control program stored in the ROM 502 and the storage unit 51, whereby the control unit 50 functions as a transmitting and receiving unit 5001, an input unit 5002, a registration unit 5003, a privilege processing unit 5004, a checkout processing unit 5005, and a display control unit 5006. In some examples, these functions may be implemented using hardware such as a dedicated circuit.

The transmitting and receiving unit 5001 transmits and receives various kinds of information to and from the store server 6. For example, the transmitting and receiving unit 5001 receives the commodity master 512 from the store server 6. The transmitting and receiving unit 5001 transmits transaction data for each one transaction to the store server 6.

The transmitting and receiving unit 5001 transmits and receives various kinds of information to and from the point server 3 and the coupon server 4 via the store server 6. For example, the transmitting and receiving unit 5001 transmits, to the coupon server 4, a registered coupon inquiry including a member ID input to the input unit 5002. The transmitting and receiving unit 5001 receives, from the coupon server 4, registered coupon information registered beforehand by a member identified by the transmitted member ID. The transmitting and receiving unit 5001 functions as a registered-coupon-information acquiring unit that acquires registered coupon information.

The transmitting and receiving unit 5001 transmits, to the coupon server 4, a presented coupon inquiry for requesting information concerning a coupon ID of a coupon presented by the customer, the coupon ID being input to the input unit 5002. As a response to the presented coupon inquiry, the transmitting and receiving unit 5001 receives information (presented coupon information) associated with the coupon ID in the coupon management file 41. The transmitting and receiving unit 5001 functions as a presented-coupon-information acquiring unit that acquires the presented coupon information.

If a coupon indicated by the acquired presented coupon information and the acquired registered coupon information (the coupon-to-be-used information 5032) is not used in a transaction, the transmitting and receiving unit 5001 transmits an unused coupon notification to the coupon server 4. The unused coupon notification provides information concerning a coupon not used in the transaction (unused coupon information) in the coupon-to-be-used information 5032. The coupon server 4 manages, as an unused coupon, the coupon indicated by the unused coupon information. If the coupon indicated by the coupon-to-be-used information 5032 is not used for settlement of the commodity registration, the transmitting and receiving unit 5001 functions as an output unit that outputs the unused coupon information to the coupon server 4.

The transmitting and receiving unit 5001 outputs the unused coupon information to the coupon server 4 on condition that an unuse confirmation indicating that a coupon relating to the coupon-to-be-used information 5032 was not used is input. If a target commodity of the coupon-to-be-used information 5032 was not registered or if target ranges of the coupon-to-be-used information 5032 overlap, the unuse confirmation can be input to the operation unit 53 by the operator after confirming with the customer that the relevant coupon will not be used. The unuse confirmation is considered to be input for declaring that the required coupon target commodity will not be additionally purchased. The unuse confirmation is considered to be declaration that it has been confirmed that a coupon having a lower priority level will not be used when application ranges of a plurality of coupons overlap.

The transmitting and receiving unit 5001 transmits, to the point server 3, point information indicating points granted to the customer in the transaction and/or points used by the customer in the transaction. The transmitting and receiving unit 5001 receives a point update notification indicating updated points from the point server 3.

Various kinds of information can be input to the input unit 5002 from the operation unit 53. For example, transaction start input for instructing a start of a transaction, checkout instruction input for instructing the checkout processing, and the like are input to the input unit 5002 from the operation unit 53. The input unit 5002 functions as a receiving unit that receives an instruction to end acquisition of commodity information by the commodity-information acquiring unit. The unuse confirmation input explained above is input to the input unit 5002 from the operation unit 53.

A commodity code can be input to the input unit 5002. The commodity code to be input is, for example, a commodity code read from a commodity barcode by the scanner 54 or a commodity code input manually via the operation unit 53. The commodity code is a part of commodity information. The input unit 5002 functions as a commodity-information acquiring unit that acquires commodity information of a commodity to be purchased by the customer.

Customer identification information for identifying the customer, that is, a member ID is input to the input unit 5002. Specifically, a member ID read by the scanner 54 from a barcode displayed on the user terminal 2 of the customer is input to the input unit 5002. The input unit 5002 does not receive input of a member ID after the settlement processing, which is a part of the checkout processing, is started. The start of the settlement processing is when information for the customer to perform payment can be input and, specifically, means when cash is deposited in the case of cash settlement or when communication is started with the settlement server in the case of credit card settlement.

A member ID read from a member card of the customer by the read reader 56 may be input to the input unit 5002. If the customer performs payment with the credit card settlement, customer information read from a credit card of the customer by the card reader 56 is input to the input unit 5002.

The registration unit 5003 executes commodity registration. Specifically, the registration unit 5003 reads, from the commodity master 512, information corresponding to the commodity code input to the input unit 5002 and registers (stores) the information in the RAM 503 as the commodity information 5031. The registration unit 5003 registers, as the coupon-to-be-used information 5032, the presented coupon information and the registered coupon information received from the coupon server 4 by the transmitting and receiving unit 5001.

The privilege processing unit 5004 executes the price-cut processing as the privilege processing concerning a coupon. On condition that a commodity registered by the registration unit 5003 is a target commodity of a coupon indicated by the coupon-to-be-used information 5032, the privilege processing unit 5004 executes the price-cut processing for the commodity. Specifically, the privilege processing unit 5004 executes the price-cut processing for the target commodity of the coupon indicated by the coupon-to-be-used information 5032 among registered commodities. More specifically, for the coupon target commodity, the privilege processing unit 5004 reads a price from the commodity master 512 and reads a price-cut amount from the coupon-to-be-used information 5032 (or reads a discount rate and calculates a discount amount corresponding to the discount rate). The privilege processing unit 5004 deducts the price-cut amount from the read price to thereby execute the price-cut processing.

In the privilege processing explained above, if there are a plurality of kinds of the coupon-to-be-used information 5032 and target ranges of coupons indicated by the coupon-to-be-used information 5032 overlap, the privilege processing unit 5004 functions as a determining unit that determines priority ranks. The determining unit compares, based on a predetermined standard, priority levels associated with the coupon-to-be-used information 5032 of the coupons having the overlapping target ranges to thereby determine priority ranks and process overlapping accordingly.

The checkout processing unit 5005 executes the checkout processing relating to a transaction. For example, the checkout processing unit 5005 executes the checkout processing based on the commodity information input to the input unit 5002 and a result of the price-cut processing by the privilege processing unit 5004. Specifically, the checkout processing unit 5005 calculates a transaction amount based on a result obtained by performing the price-cut processing according to the commodity information 5031 and the coupon-to-be-used information 5032 and further calculates points or the like to be granted to the customer.

The checkout processing unit 5005 executes the settlement processing for completing payment of the calculated transaction amount. If payment by cash is selected by the operator, the checkout processing unit 5005 deducts the transaction amount from an amount deposited to the change machine 57 to calculate change and causes the change machine 57 to dispense the calculated change. If payment by cashless settlement such as payment by a credit card is selected by the operator, the checkout processing unit 5005 communicates with the not-illustrated settlement server via the transmitting and receiving unit 5001 and causes the settlement server to complete settlement. If the settlement processing is completed, the checkout processing unit 5005 causes the printer 55 to print a receipt.

The display control unit 5006 controls the display unit 52 and causes the display unit 52 to display various kinds of information. For example, the display control unit 5006 causes the display unit 52 to display commodity information of a registered commodity, a transaction amount, various operation screens, and the like. The display control unit 5006 causes the display unit 52 to display a confirmation screen for the operator to perform unuse confirmation input. The confirmation screen is an operation screen for confirming that a coupon having a lower priority level is not used if there are a plurality of kinds of the coupon-to-be-used information 5032 and application ranges of coupons indicated by the coupon-to-be-used information 5032 overlap.

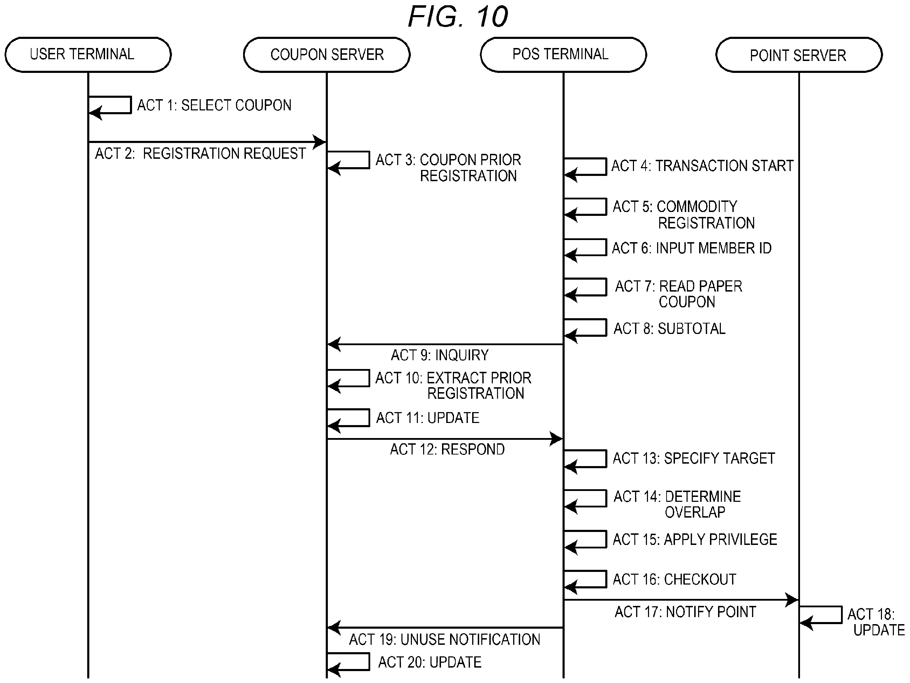

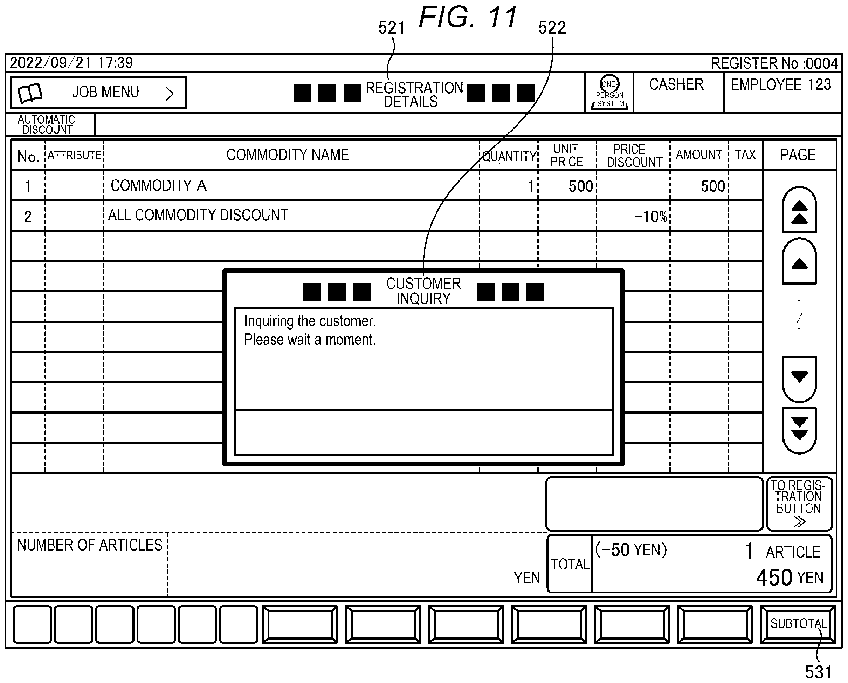

FIG. 10 is a sequence chart illustrating a flow of an operation of the coupon system 10 in a transaction in which a coupon is used. FIG. 11 to FIG. 18 are diagrams illustrating examples of screens displayed by the display unit 52 of the POS terminal 5 during operations of the coupon system 10.

The customer selects a coupon to be registered beforehand by the user terminal 2. A coupon ID of a selected one or more coupons is input to the user terminal 2 (Act 1). The user terminal 2 transmits, to the coupon server 4, a coupon-to-be-used prior registration request in which a member ID and the input coupon ID(s) are associated (Act 2).

The coupon server 4 checks whether the member ID and the coupon ID(s) included in the coupon-to-be-used prior registration request are associated in the coupon management file 41 and, if the member ID and the coupon ID(s) are associated, performs coupon-to-be-used prior registration (Act 3). Specifically, the coupon server 4 registers, in the registered coupon file 42, the member ID, the coupon ID(s), and a date of use included in the coupon-to-be-used prior registration request.

At this time, the coupon server 4 registers, in the registered coupon file 42, a usable coupon, that is, coupon information in which "unused" is registered in the use flag in the coupon management file 41. Consequently, prior registration of a coupon by the customer is completed. If the member ID and a coupon ID included in the coupon-to-be-used prior registration request are not associated in the coupon management file 41, the coupon server 4 transmits error information to the user terminal 2.

If the customer carries a commodity to be purchased to a register counter for checkout, transaction start input is performed on the POS terminal 5 by the operator (Act 4). Subsequently, the POS terminal 5 executes commodity registration for the commodity to be purchased by the customer (Act 5). A member ID read by the scanner 54 from a barcode displayed on the user terminal 2 is input to the POS terminal 5 (Act 6).

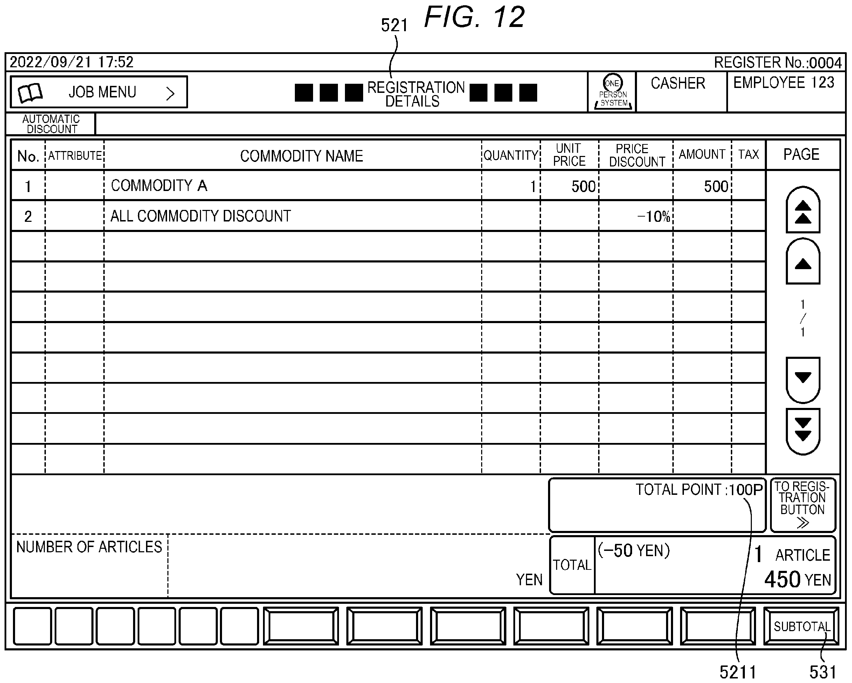

After Act 6, as illustrated in FIG. 11, the display unit 52 of the POS terminal 5 popup-displays a customer inquiry screen 522 over a registration details screen 521 displayed during commodity registration. The POS terminal 5 informs the operator that a possessed point value stored in association with the member ID in the point management file 31 of the point server 3 is inquired by the customer inquiry screen 522. If receiving a response to the inquiry, the POS terminal 5 ends the popup-display of the customer inquiry screen 522 and, as illustrated in FIG. 12, restores the display of the display unit 52 to the registration details screen 521. At this time, a point total 5211 corresponding to the member ID read in Act 6 is displayed on the registration details screen 521.

Referring back to FIG. 10, a coupon ID can be input to the POS terminal 5 by causing the scanner 54 to read a code symbol (a barcode or the like) included on a paper coupon (or an application coupon displayed on the user terminal 2) (Act 7). The POS terminal 5 receiving the input of this coupon ID transmits a presented coupon inquiry to the coupon server 4, acquires, from the coupon management file 41, coupon contents and a priority level corresponding to the coupon ID, and stores the coupon contents and the priority level as coupon-to-be-used information 5032. The coupon server 4 rewrites a use flag corresponding to the coupon ID to "used".

Note that the input of the member ID and the coupon ID can be between transaction start input and subtotal key input (operation for ending the commodity registration and starting the settlement processing in the checkout processing).

If the commodity registration for all commodities to be purchased by the customer is completed, the operator operates a subtotal key 531 (see FIG. 11). Consequently, checkout instruction input is input to the POS terminal 5 (Act 8). Then, the POS terminal 5 transmits, to the coupon server 4, a registered coupon inquiry including the member ID input in Act 6 (Act 9).

The coupon server 4 extracts a coupon registered beforehand (Act 10). Specifically, the coupon server 4 extracts, from the registered coupon file 42, a coupon ID corresponding to the member ID included in the received coupon inquiry. The coupon server 4 updates the coupon management file 41 (Act 11). Specifically, the coupon server 4 rewrites a use flag corresponding to the extracted coupon ID to "used".

The coupon server 4 transmits registered coupon information to the POS terminal 5 that is a transmission source of the coupon inquiry (Act 12). More specifically, the coupon server 4 reads, from the coupon management file 41, coupon contents and a priority level corresponding to the coupon ID extracted from the registered coupon file 42. The coupon server 4 transmits registered coupon information including the coupon ID, the date of use, the coupon contents, and the priority level to the POS terminal 5. The POS terminal 5 stores the received registered coupon information as the coupon-to-be-used information 5032.

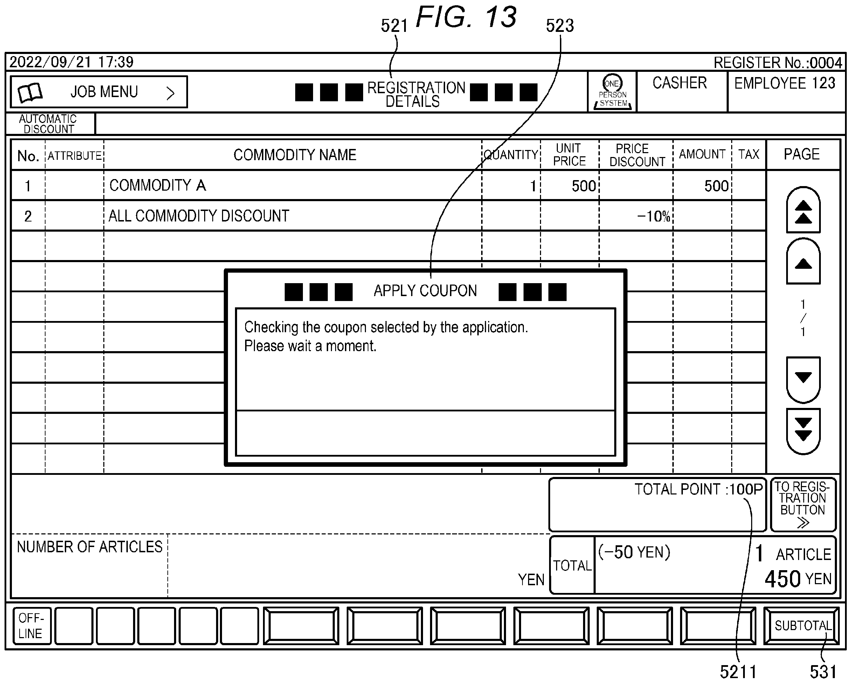

In Act 9 to Act 12, as illustrated in FIG. 13, the display unit 52 of the POS terminal 5 popup-displays a coupon application screen 523 over the registration details screen 521. With the coupon application screen 523, the POS terminal 5 informs the operator that a coupon selected by an application is being confirmed.

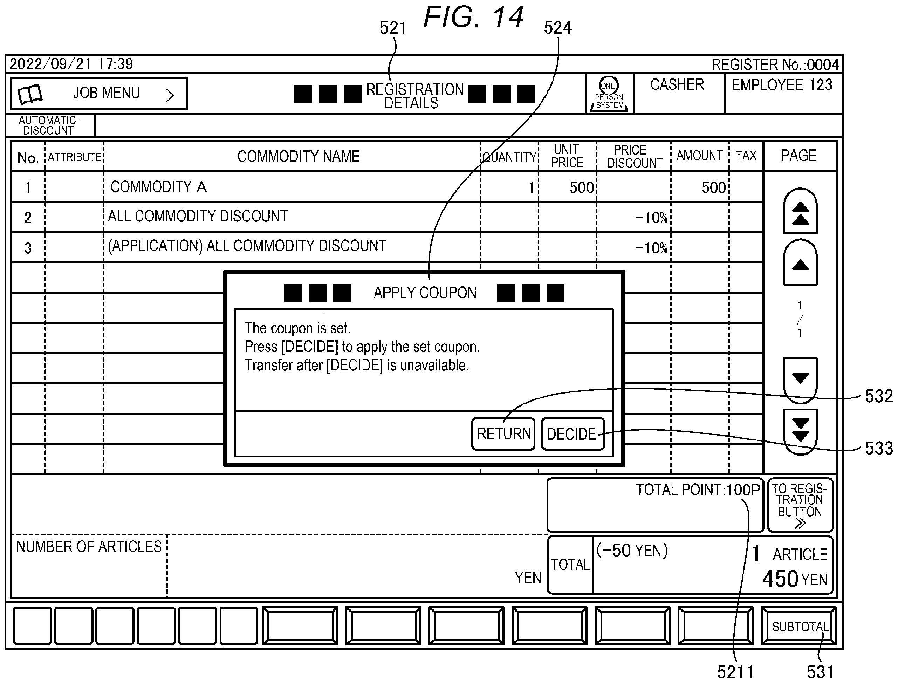

After Act 12, if the received registered coupon information is stored, the POS terminal 5 transitions the popup screen displayed over the registration details screen 521 to a coupon application screen 524 illustrated in FIG. 14. With the coupon application screen 524, the POS terminal 5 informs that registration is present in the registered coupon file 42, that is, a coupon selected beforehand for the present transaction is present.

The coupon application screen 524 includes a return button 532 and a decision button 533. If the return button 532 is operated, the POS terminal 5 ends the popup-display of the coupon application screen 524 and restores the display of the display unit 52 to only the registration details screen 521. With the pressing of the return button 532, the POS terminal 5 can add additional commodities to the commodity registration.

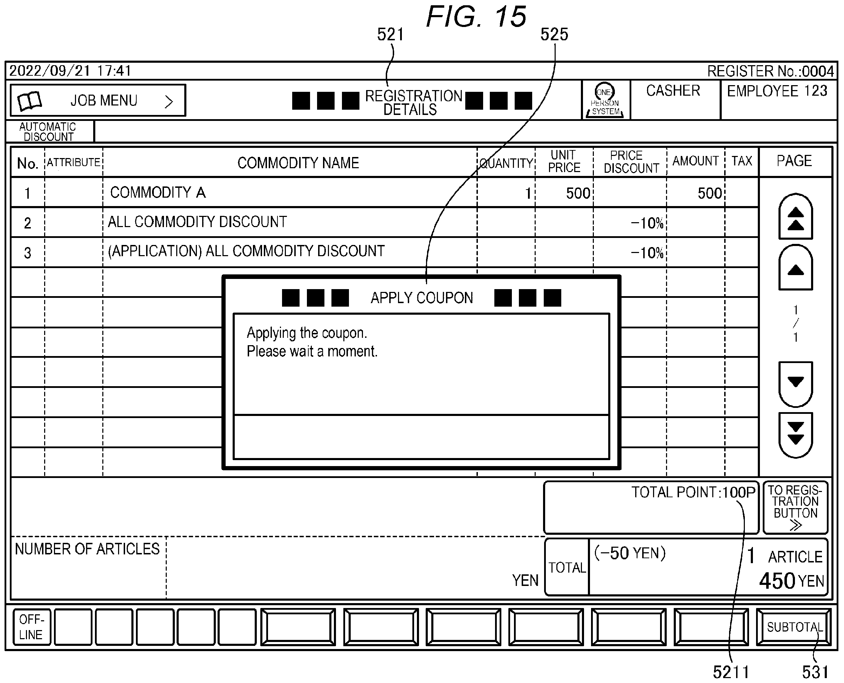

If the decision button 533 is operated, the POS terminal 5 advances the processing to the Act 13 and transitions the popup screen displayed over the registration details screen 521 from the coupon application screen 524 (see FIG. 14) to a coupon application screen 525 illustrated in FIG. 15. With the coupon application screen 525, the POS terminal 5 informs that a coupon to be used for the present transaction is being applied.

Referring back to FIG. 10, in Act 13, the POS terminal 5 specifies, among the registered commodities, target ranges of the coupons indicated by the coupon-to-be-used information 5032 (commodities, classifications, and the like to be set as application targets) (Act 13). Subsequently, the POS terminal 5 determines whether the target ranges of the coupons overlap (Act 14). In the determination, if there are coupons having overlapping targets, the POS terminal 5 compares priority levels of the coupons and determines to apply a particular coupon that the other overlapping coupons are unused (left unapplied).

Subsequently, the POS terminal 5 executes the price-cut processing as the privilege processing for a commodity that is the application target of the coupon indicated by the coupon-to-be-used information 5032 among the registered commodities (Act 15).

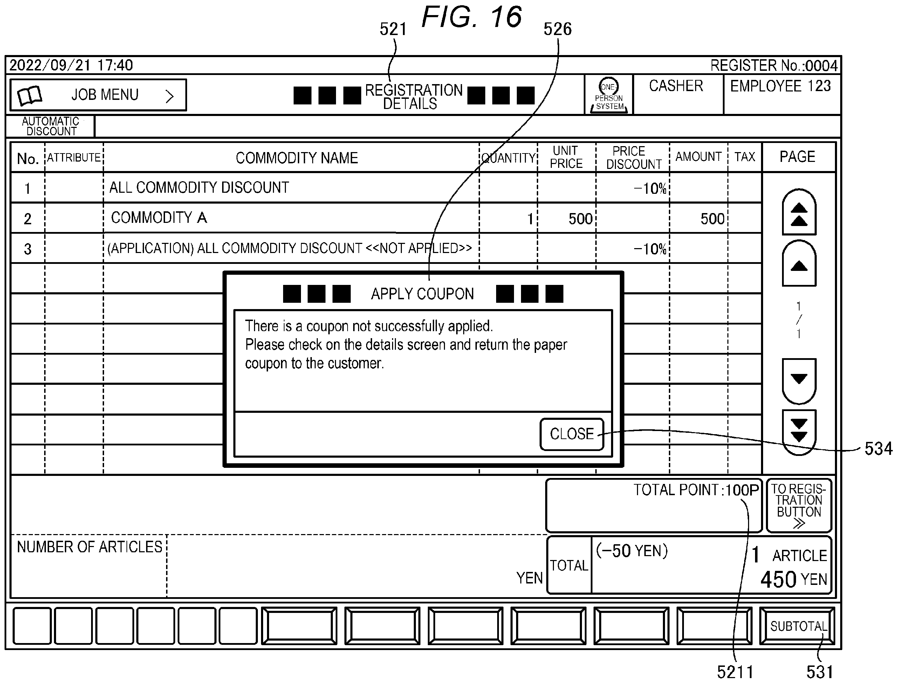

If an unused coupon is present in Act 14, when the POS terminal 5 ends the privilege processing in Act 15, the POS terminal 5 transitions the popup screen displayed over the registration details screen 521 from the coupon application screen 525 (see FIG. 15) to a coupon application screen 526 illustrated in FIG. 16. With the coupon application screen 526, the POS terminal 5 informs the operator that an unused coupon is present. The coupon application screen 526 is an example of a confirmation screen explained above.

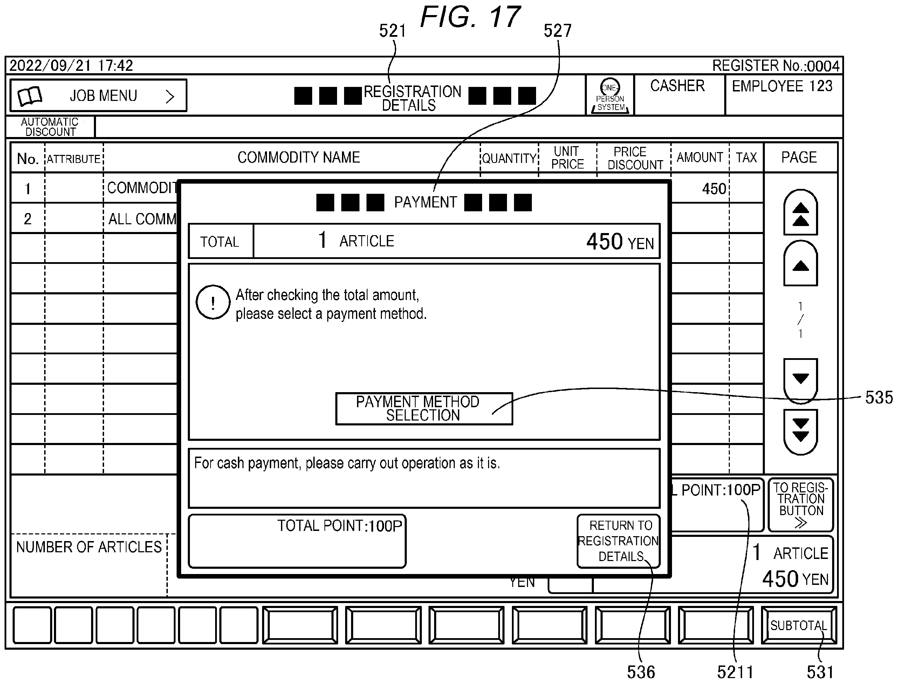

The coupon application screen 526 includes a close button 534. If the close button 534 is operated, the POS terminal 5 closes the coupon application screen 526 and subsequently popup-displays a payment screen 527 illustrated in FIG. 17 over the registration details screen 521.

The payment screen 527 includes a payment method selection button 535 and a return button 536. If the payment method selection button 535 is operated, the POS terminal 5 displays a screen for receiving selection of a payment method (credit settlement, barcode settlement, electronic money settlement, or the like) other than cash payment.

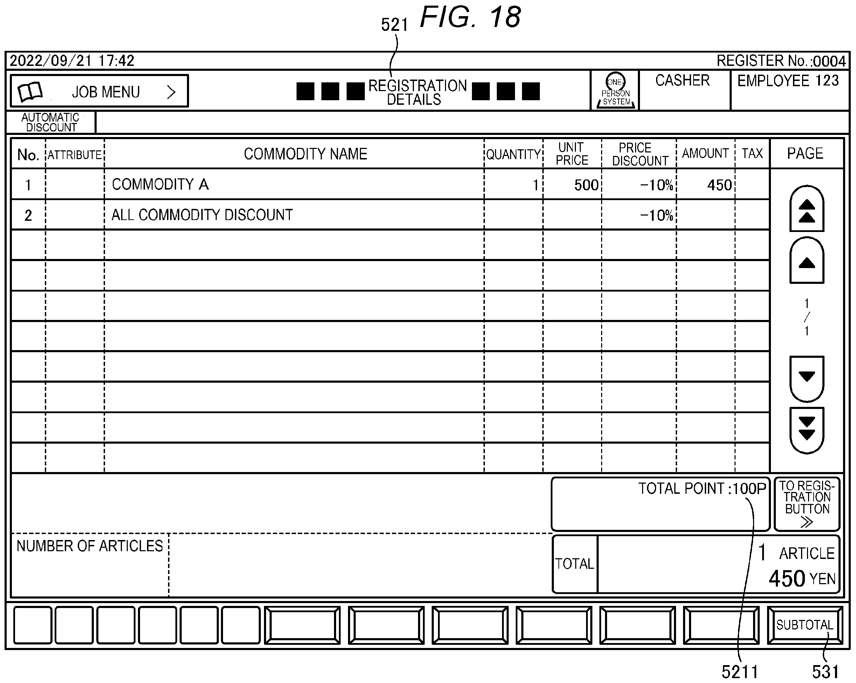

If the return button 536 is operated, the POS terminal 5 ends the popup display of the payment screen 527 and, as illustrated in FIG. 18, restores the display of the display unit 52 to the registration details screen 521. If the subtotal key 531 is operated again, since the coupon application (Act 9 to Act 15) processing has ended, the coupon application screens 523 to 526 (FIG. 13 to FIG. 16) are not displayed again and the payment screen 527 (see FIG. 17) is popup-displayed.

If cash is deposited to the change machine 57 or the payment method selection button 535 is operated during the display of the payment screen 527, the POS terminal 5 advances the processing to the next Act 16.

Referring back to FIG. 10, in Act 16, the POS terminal 5 executes the checkout processing based on the registered commodity information and the result of the price-cut processing (Act 16).

The POS terminal 5 transmits, to the point server 3, point information in which a point value calculated for the checkout processing and the member ID of the customer are associated (Act 17). The point server 3 updates the point management file 31 based on the received point information (Act 18).

If any one of the coupons indicated by the coupon-to-be-used information 5032 was not used in the transaction, the POS terminal 5 transmits, to the coupon server 4, an unused coupon notification in which a coupon ID of the not-used coupon and the member ID are associated (Act 19).

The coupon server 4 updates the coupon management file 41 based on the received unused coupon notification (Act 20). Specifically, the coupon server 4 rewrites, in the coupon management file 41, a use flag of the coupon information specified by the member ID and the coupon ID included in the unused coupon notification to "unused". Consequently, the customer can use the not-used coupon in a later transaction.

According to the operation explained above, the customer can obtain a privilege by the coupon simply by registering, beforehand, a coupon to be used in a transaction and showing the member ID during checkout. The customer can concurrently use a paper coupon and an application coupon in the same transaction. Even if coupons having overlapping application ranges are registered, by comparing priority levels of the coupons, the POS terminal 5 can select the coupon that should be used.

According to the processing explained above, the POS terminal 5 can efficiently perform processing when the customer uses a coupon. If a paper coupon or application coupon is read during the commodity registration or a coupon registered beforehand was not used, the POS terminal 5 provides information concerning the these coupons to the coupon server 4.

The POS terminal 5 in an embodiment includes a commodity-information acquiring unit (as the input unit 5002) that acquires commodity information of a commodity relating to a transaction with a customer, an input unit 5002 that receives input of customer identification information for identifying the customer, a receiving unit (as the input unit 5002) that receives an instruction to end the acquisition of the commodity information by the commodity-information acquiring unit, a registered-coupon-information acquiring unit (as the transmitting and receiving unit 5001) that acquires registered coupon information indicating a coupon registered beforehand by the customer, a privilege processing unit 5004 that executes the privilege processing based on the registered coupon information when the commodity indicated by the commodity information acquired by the commodity-information acquiring unit is a target commodity of the registered coupon information, and a checkout processing unit 5005 that executes the checkout processing based on the commodity information and a result of the privilege processing by the privilege processing unit 5004.

Consequently, the POS terminal 5 can acquire, based on an input member ID, coupon information of coupons to be used by the customer. Therefore, even if the customer uses a plurality of coupons in one transaction, the POS terminal 5 can perform the price-cut processing relating to the plurality of coupons simply by reading the member ID. As a result, the POS terminal 5 can reduce the time required for checkout and improve efficiency of the operator.

The POS terminal 5 in an embodiment further includes a determining unit (as the privilege processing unit 5004) that determines priority ranks of different coupons by comparing, based on a predetermined standard or rule, priority levels associated with the registered coupon information having the overlapping target ranges. The privilege processing unit 5004 does not use, for the privilege processing, the registered coupon information determined by the determining unit as having low priority ranks among the registered coupon information having the overlapping target ranges.

Consequently, even if coupons having overlapping application ranges are registered for use, the POS terminal 5 can select a coupon that should be used.

Further, the POS terminal 5 in an embodiment includes a presented-coupon-information acquiring unit (as the transmitting and receiving unit 5001) that acquires presented coupon information indicating a coupon presented by the customer during the transaction. The privilege processing unit 5004 executes the privilege processing based on the presented coupon information on condition that the commodity indicated by the commodity information acquired by the commodity-information acquiring unit is a target commodity of the presented coupon information.

Consequently, the POS terminal 5 can acquire coupon information of one or more coupons presented by the customer and use the coupon information concurrently with the coupon indicated by the registered coupon information.

In addition, the POS terminal 5 in an embodiment further includes a display control unit 5006 that causes a display device to display the registered coupon information for any coupon not used for the privilege processing to the operator.

Consequently, the POS terminal 5 can inform the operator of a coupon not used in a transaction from among those coupons registered beforehand. Therefore, the operator can inform the customer about a coupon registered beforehand but not used in the transaction.

In the POS terminal 5 in an embodiment, the registered-coupon-information acquiring unit receives, from the coupon server 4 that stores the customer identification information and the registered coupon information in association with each other, registered coupon information corresponding to the customer identification information input to the input unit 5002.

Consequently, the POS terminal 5 can acquire, from the coupon server 4 that conventionally performs data transmission and reception in order to manage coupons, the registered coupon information and does not need to increase communication targets. Therefore, it is possible to simplify a system configuration for the POS terminal 5 to acquire the registered coupon information.

In an embodiment, the control program executed in the POS terminal 5 may be recorded in a non-transitory, computer-readable recording medium such as a CD-ROM. The control program executed in the POS terminal 5 may be stored on a computer connected to a network such as the Internet and downloaded through the network or may be accessed through a network such as the Internet.

While the embodiment is explained above, this embodiment is presented as an example and is not intended to limit the scope of invention. This embodiment can be implemented in other various forms. Various omissions, substitutions, changes, and combinations can be made in a range not departing from the gist of the invention. These embodiments and modifications thereof are included in the scope and the gist of the invention and included in the inventions described in the claims and a scope of equivalents of the inventions.

## Claims

1. A checkout apparatus, comprising:
a communication interface connectable to a store server; and
a control unit configured to:
acquire commodity information for a commodity being registered for purchase in a transaction with a customer;
receive customer identification information identifying the customer;
acquire pre-registered coupon information indicating a coupon registered by the customer based on the received customer identification information;
execute privilege processing based on the pre-registered coupon information and the acquired commodity information; and
execute checkout processing for the transaction based on the commodity information and the executed privilege processing.

2. The checkout apparatus according to claim 1, further comprising:
a storage unit configured to store a commodity master file, wherein
the control unit acquires the commodity information for the commodity from the commodity master file stored in the storage unit.

3. The checkout apparatus according to claim 1 or 2, further comprising:
a commodity scanner configured to read a commodity code on the commodity, wherein
the control unit acquires the commodity information for the commodity based on the commodity code read by the commodity scanner.

4. The checkout apparatus according to claim 3, wherein the control unit receives the customer identification information from the commodity scanner when the commodity scanner reads a member card of the customer.

5. The checkout apparatus according to any one of claims 1 to 3, wherein the control unit receives the customer identification information from a scanner configured to read a member card of the customer.

6. The checkout apparatus according to any one of claims 1 to 5, wherein the control unit acquires the pre-registered coupon information by causing a request including the customer identification information to be transmitted to the store server via the communication interface.

7. The checkout apparatus according to any one of claims 1 to 6, wherein, in the privilege processing, the control unit confirms conditions for a coupon use are satisfied.

8. The checkout apparatus according to claim 7, wherein, in the privilege processing, the control unit selects between any overlapping conditional coupons based on a priority ranking.

9. The checkout apparatus according to any one of claims 1 to 8, wherein the control unit is further configured to acquire presented coupon information based on a coupon identification of a coupon presented by the customer during the transaction and include the presented coupon information in the privilege processing.

10. The checkout apparatus according to any one of claims 1 to 9, further comprising:
a display device to display information to an operator, wherein
the control unit is further configured to cause the display device to display information indicating any unused coupon included in the pre-registered coupon information after the privilege processing.

11. A checkout system, comprising:
a plurality of checkout apparatuses according to any one of claims 1 to 10;
a store server connected to the plurality of checkout apparatus; and
a coupon server connected to the store server.

12. A non-transitory, computer-readable medium storing program instructions which when executed by a checkout apparatus cause the checkout apparatus to perform a method comprising:
acquiring commodity information for a commodity being registered for purchase in a transaction with a customer;
receiving customer identification information identifying the customer;
acquiring pre-registered coupon information indicating a coupon registered by the customer based on the received customer identification information;
performing privilege processing based on the pre-registered coupon information and the acquired commodity information; and
performing checkout processing for the transaction based on the commodity information and the result of the privilege processing.

13. The medium according to claim 12, wherein the commodity information for the commodity is acquired from a commodity master file stored in a storage unit of the checkout apparatus.

14. The medium according to claim 12 or 13, wherein the customer identification information is received from a scanner configured to read a member card of the customer.

15. The medium according to any one of claims 12 to 14, wherein the pre-registered coupon information is acquired by causing a request including the customer identification information to be transmitted to a store server via a communication interface of the checkout apparatus.
